# EUROPEAN PATENT SPECIFICATION

(11) **EP 3 619 880 B1**
(45) Date of publication and mention of the grant of the patent: **06.04.2022**
(21) Application number: 18732176.5
(22) Date of filing: 03.05.2018
(51) Int. Cl.: H04L 5/00, H04L 27/26, H04W 72/00, H04L 5/14, H04W 72/12

(54) **TRANSMITTING REFERENCE SIGNALS BASED ON WIRELESS COMMUNICATIONS TIMELINE**
ÜBERTRAGUNG VON REFERENZSIGNALEN AUF DER BASIS EINER DRAHTLOSKOMMUNIKATIONSZEITLEISTE
TRANSMISSION DE SIGNAUX DE RÉFÉRENCE SUR LA BASE D'UNE CHRONOLOGIE DE COMMUNICATION SANS FIL

(30) Priority: 04.05.2017 US 201762501563 P; 02.05.2018 US 201815969366
(43) Date of publication of application: 11.03.2020
(73) Proprietor: QUALCOMM Incorporated, San Diego, CA 92121-1714 (US)
(72) Inventor: HUANG, Yi, San Diego, California 92121-1714 (US); WANG, Renqiu, San Diego, California 92121-1714 (US); PARK, Seyong, San Diego, California 92121-1714 (US); XU, Hao, San Diego, California 92121-1714 (US); GAAL, Peter, San Diego, California 92121-1714 (US); CHEN, Wanshi, San Diego, California 92121-1714 (US); MANOLAKOS, Alexandros, San Diego, California 92121-1714 (US)
(74) Representative: Dunlop, Hugh Christopher
(86) International application number: PCT/US2018/030908
(87) International publication number: WO 2018/204660

(56) References cited:
- WO-A1-2016/048595
- WO-A1-2018/049035
- WO-A1-2018/093938
- NOKIA ET AL: "On the HARQ operation and timing relationships", 3GPP DRAFT; R1-1705244_HARQTIMING_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, WA, USA; 20170403 - 20170407 2 April 2017 (2017-04-02), XP051243375, Retrieved from the Internet: URL:http://www.3gpp.org/ftp/Meetings_3GPP_ SYNC/RAN1/Docs/ [retrieved on 2017-04-02]
- NOKIA ALCATEL-LUCENT SHANGHAI BELL: "On 2-OS sPUSCH structure and details of UL DMRS in shorter TTI", 3GPP DRAFT; R1-1612153 ON 2-OS SPUSCH STRUCTURE AND DETAILS OF UL DMRS IN SHORTER TTI, 3RD GENERATION PARTNERSHIP PROJECT (3GPP), MOBILE COMPETENCE CENTRE ; 650, ROUTE DES LUCIOLES ; F-06921 SOPHIA-AN , vol. RAN WG1, no. Reno, Nevada, US; 20161114 - 20161118 13 November 2016 (2016-11-13), XP051176105, Retrieved from the Internet: URL:http://www.3gpp.org/ftp/Meetings_3GPP_ SYNC/RAN1/Docs/ [retrieved on 2016-11-13]

## Description

### BACKGROUND

Aspects of the present disclosure relate generally to wireless communication systems, and more particularly, to transmitting reference signals.

Wireless communication systems are widely deployed to provide various types of communication content such as voice, video, packet data, messaging, broadcast, and so on. These systems may be multiple-access systems capable of supporting communication with multiple users by sharing the available system resources (e.g., time, frequency, and power). Examples of such multiple-access systems include code-division multiple access (CDMA) systems, time-division multiple access (TDMA) systems, frequency-division multiple access (FDMA) systems, and orthogonal frequency-division multiple access (OFDMA) systems, and single-carrier frequency division multiple access (SC-FDMA) systems.

These multiple access technologies have been adopted in various telecommunication standards to provide a common protocol that enables different wireless devices to communicate on a municipal, national, regional, and even global level. For example, a fifth generation (5G) wireless communications technology (which can be referred to as 5G new radio (5G NR)) is envisaged to expand and support diverse usage scenarios and applications with respect to current mobile network generations. In an aspect, 5G communications technology can include services such as: enhanced mobile broadband (eMBB) addressing human-centric use cases for access to multimedia content, services and data; ultra-reliable-low latency communications (URLLC) with certain specifications for latency and reliability; and massive machine type communications, which can allow a very large number of connected devices and transmission of a relatively low volume of non-delay-sensitive information. As the demand for mobile broadband access continues to increase, however, further improvements in 5G communications technology and beyond may be desired.

Generally, in 5G, long term evolution (LTE), and/or other wireless communications, a user equipment (UE) can communicate with a Node B to receive access to a wireless communications network. The Node B can schedule wireless resources (over frequency and time) for the UE to utilize in communicating. In addition, the UE can transmit one or more reference signals to the Node B, which may include a demodulation reference signal (DM-RS) that allows the Node B to determine one or more parameters for attempting to decode wireless communications from the UE. Typically, in legacy LTE (e.g., prior to 5G), the UE transmits the DM-RS in one symbol in each slot of a subframe (at least in subframes where the UE performs other uplink communications) at a fixed symbol index - symbols 3 and 10 in slots 0 and 1, respectively, in the subframe.

In 5G, different delay values (referred to as K2) between slots for receiving uplink grants and transmitting corresponding uplink communications can be supported. For example, K2 = 0 can be supported where a UE decodes an uplink grant and transmits corresponding uplink communications in the same slot, or K2 = N, where N > 0, can be supported where a UE decodes an uplink grant in one slot and transmits corresponding uplink communications N slot(s) later. The delay value, K2, can be configured by a Node B, determined based on a standard or specification (e.g., hardcoded instructions in UE memory), determined based on a combination of instructions in the UE memory and parameters configured by the Node B, etc., and the UE can determine when to transmit uplink wireless communications based on the uplink grant and the delay value K2.

3GPP discussion and decision document R1-1705244 "On the HARQ operation and timing relationships" by Nokia, Alcatel-Lucent Shanghai Bell discusses issues related HARQ and scheduling timing as well as self-contained operation. 3GPP discussion and decision document R1-1612153 "On 2-OS sPUSCH structure and details of UL DMRS in shorter TTI" by Nokia, Alcatel-Lucent Shanghai Bell discusses the UL sTTI structure and DMRS configuration for 2 OFDM symbol sTTIs. WO 2016/048595 A1 discusses a resource grant comprising an indicator of whether to transmit a demodulation reference signal for an uplink control channel or an uplink data channel.

### SUMMARY

The invention is defined by the methods and apparatuses of the appended claims.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
FIG. 1 illustrates an example of a wireless communication system, in accordance with various aspects of the present disclosure;
FIG. 2 is a block diagram illustrating an example of a base station, in accordance with various aspects of the present disclosure;
FIG. 3 is a block diagram illustrating an example of a UE, in accordance with various aspects of the present disclosure;
FIG. 4 is a flow chart illustrating an example of a method for transmitting reference signals, in accordance with various aspects of the present disclosure;
FIG. 5 is a flow chart illustrating an example of a method for indicating reference signal time divisions, in accordance with various aspects of the present disclosure;
FIGs. 6A and 6B illustrate examples of resource allocations for a first delay value, in accordance with various aspects of the present disclosure;
FIGs. 7A and 7B illustrate examples of resource allocations for a second delay value, in accordance with various aspects of the present disclosure; and
FIG. 8 is a block diagram illustrating an example of a MIMO communication system including a base station and a UE, in accordance with various aspects of the present disclosure.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

The described features generally relate to determining a time division location for transmitting a reference signal (RS) based at least in part on a delay value, where the delay value can be configured for determining when to transmit communications corresponding to a grant. In an example, the time division location can correspond to time division resources, such as a slot defined in a wireless communication technology. For example, the slot can be defined by a plurality of orthogonal frequency division multiplexing (OFDM) symbols, single carrier frequency division multiplexing (SC-FDM) symbols, etc. in time, where the symbols may include a similar set of frequency resources over a period of time. In addition, in an example, one or more adjacent symbols in a given slot, and/or the slot itself, can define a transmission time interval (TTI) for the wireless communication technology (such as a fifth generation (5G) new radio (NR) technology). For example, the delay value can indicate a number of slots between a first slot, during which an uplink grant is received, and a second slot during which to transmit the corresponding uplink communications. In one example, the delay value can be zero, which can indicate to transmit the corresponding uplink communications in the same slot during which the uplink grant is received, or the delay value can be greater than zero, which can indicate to transmit the corresponding uplink communications in a subsequent slot, offset from the slot during which the uplink grant is received, by a number of slots corresponding to the delay value. Based on this delay value, an index of a time division within the slot (e.g., a symbol) for transmitting a corresponding RS can be determined.

In an example, the RS can correspond to a demodulation reference signal (DM-RS) or other RSs that may be transmitted by a user equipment (UE) in a wireless network. In a specific example, where the delay value is 0 (e.g., the same slot is configured for receiving the uplink grant and transmitting the corresponding uplink communications), DM-RS can be transmitted in an initial (e.g., first) uplink symbol (e.g., after one or more downlink symbols) within the slot. In another specific example, where the delay value is greater than 0 (e.g., a subsequent slot from the slot for receiving the uplink grant is configured for transmitting the corresponding uplink communications), DM-RS can be transmitted at a fixed symbol index within the slot during which the uplink grant is received and/or within the slot during which the corresponding uplink communications are to be transmitted based on the delay value and/or substantially any other slot. In this example, the fixed symbol index can be specific regardless of when the slot transitions from downlink symbols defined for downlink communications to uplink symbols defined for uplink communications.

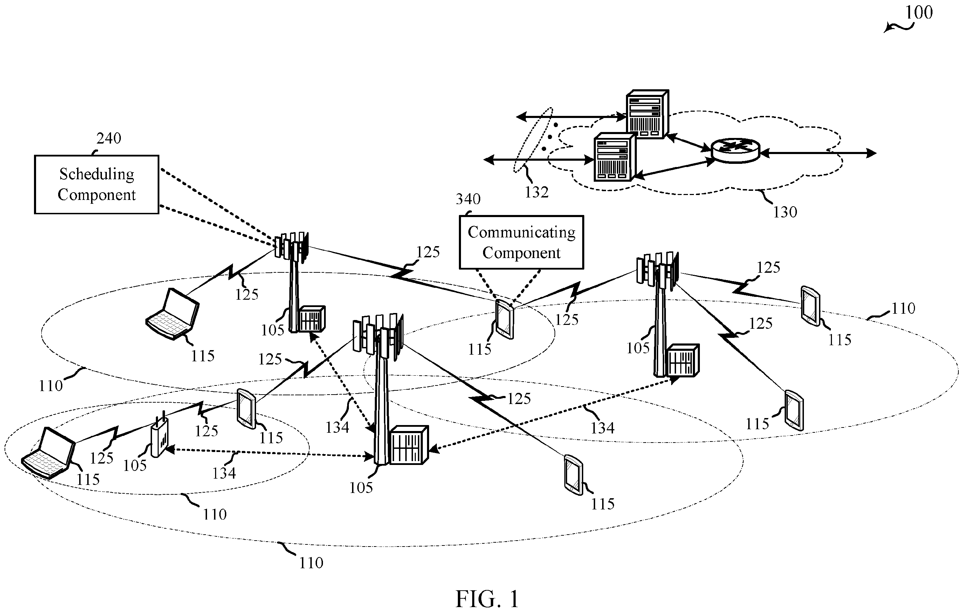

The described features will be presented in more detail below with reference to FIGS. 1-8.

As used in this application, the terms "component," "module," "system" and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets, such as data from one component interacting with another component in a local system, distributed system, and/or across a network such as the Internet with other systems by way of the signal.

Techniques described herein may be used for various wireless communication systems such as CDMA, TDMA, FDMA, OFDMA, SC-FDMA, and other systems. The terms "system" and "network" may often be used interchangeably. A CDMA system may implement a radio technology such as CDMA2000, Universal Terrestrial Radio Access (UTRA), etc. CDMA2000 covers IS-2000, IS-95, and IS-856 standards. IS-2000 Releases 0 and A are commonly referred to as CDMA2000 IX, IX, etc. IS-856 (TIA-856) is commonly referred to as CDMA2000 1xEV-DO, High Rate Packet Data (HRPD), etc. UTRA includes Wideband CDMA (WCDMA) and other variants of CDMA. A TDMA system may implement a radio technology such as Global System for Mobile Communications (GSM). An OFDMA system may implement a radio technology such as Ultra Mobile Broadband (UMB), Evolved UTRA (E-UTRA), IEEE 802.11 (Wi-Fi), IEEE 802.16 (WiMAX), IEEE 802.20, Flash-OFDM^{™}, etc. UTRA and E-UTRA are part of Universal Mobile Telecommunication System (UMTS). 3GPP Long Term Evolution (LTE) and LTE-Advanced (LTE-A) are new releases of UMTS that use E-UTRA. UTRA, E-UTRA, UMTS, LTE, LTE-A, and GSM are described in documents from an organization named "3rd Generation Partnership Project" (3GPP). CDMA2000 and UMB are described in documents from an organization named "3rd Generation Partnership Project 2" (3GPP2). The techniques described herein may be used for the systems and radio technologies mentioned above as well as other systems and radio technologies, including cellular (e.g., LTE) communications over a shared radio frequency spectrum band. The description below, however, describes an LTE/LTE-A system for purposes of example, and LTE terminology is used in much of the description below, although the techniques are applicable beyond LTE/LTE-A applications (e.g., to 5G networks or other next generation communication systems).

The following description provides examples, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in other examples.

Various aspects or features will be presented in terms of systems that can include a number of devices, components, modules, and the like. It is to be understood and appreciated that the various systems can include additional devices, components, modules, etc. and/or may not include all of the devices, components, modules etc. discussed in connection with the figures. A combination of these approaches can also be used.

**FIG.** 1 illustrates an example of a wireless communication system 100 in accordance with various aspects of the present disclosure. The wireless communication system 100 may include one or more base stations 105, one or more UEs 115, and a core network 130. The core network 130 may provide user authentication, access authorization, tracking, internet protocol (IP) connectivity, and other access, routing, or mobility functions. The base stations 105 may interface with the core network 130 through backhaul links 132 (e.g., SI, etc.). The base stations 105 may perform radio configuration and scheduling for communication with the UEs 115, or may operate under the control of a base station controller (not shown). In various examples, the base stations 105 may communicate, either directly or indirectly (e.g., through core network 130), with one another over backhaul links 134 (e.g., X2, etc.), which may be wired or wireless communication links.

The base stations 105 may wirelessly communicate with the UEs 115 via one or more base station antennas. Each of the base stations 105 may provide communication coverage for a respective geographic coverage area 110. In some examples, base stations 105 may be referred to as a network entity, a base transceiver station, a radio base station, an access point, a radio transceiver, a NodeB, eNodeB (eNB), Home NodeB, a Home eNodeB, or some other suitable terminology. The geographic coverage area 110 for a base station 105 may be divided into sectors making up only a portion of the coverage area (not shown). The wireless communication system 100 may include base stations 105 of different types (e.g., macro or small cell base stations). There may be overlapping geographic coverage areas 110 for different technologies.

In some examples, the wireless communication system 100 may be or include a Long Term Evolution (LTE) or LTE-Advanced (LTE-A) network. The wireless communication system 100 may also be a next generation network, such as a 5G wireless communication network. In LTE/LTE-A networks, the term evolved node B (eNB), gNB, etc. may be generally used to describe the base stations 105, while the term UE may be generally used to describe the UEs 115. The wireless communication system 100 may be a heterogeneous LTE/LTE-A network in which different types of eNBs provide coverage for various geographical regions. For example, each eNB or base station 105 may provide communication coverage for a macro cell, a small cell, or other types of cell. The term "cell" is a 3GPP term that can be used to describe a base station, a carrier or component carrier associated with a base station, or a coverage area (e.g., sector, etc.) of a carrier or base station, depending on context.

A macro cell may cover a relatively large geographic area (e.g., several kilometers in radius) and may allow unrestricted access by the UEs 115 with service subscriptions with the network provider.

A small cell may include a lower-powered base station, as compared with a macro cell, that may operate in the same or different (e.g., licensed, unlicensed, etc.) frequency bands as macro cells. Small cells may include pico cells, femto cells, and micro cells according to various examples. A pico cell, for example, may cover a small geographic area and may allow unrestricted access by the UEs 115 with service subscriptions with the network provider. A femto cell may also cover a small geographic area (e.g., a home) and may provide restricted access by the UEs 115 having an association with the femto cell (e.g., UEs 115 in a closed subscriber group (CSG), UEs 115 for users in the home, and the like). An eNB for a macro cell may be referred to as a macro eNB, gNB, etc. An eNB for a small cell may be referred to as a small cell eNB, a pico eNB, a femto eNB, or a home eNB. An eNB may support one or multiple (e.g., two, three, four, and the like) cells (e.g., component carriers).

The communication networks that may accommodate some of the various disclosed examples may be packet-based networks that operate according to a layered protocol stack and data in the user plane may be based on the IP. A packet data convergence protocol (PDCP) layer can provide header compression, ciphering, integrity protection, etc. of IP packets. A radio link control (RLC) layer may perform packet segmentation and reassembly to communicate over logical channels. A MAC layer may perform priority handling and multiplexing of logical channels into transport channels. The MAC layer may also use HARQ to provide retransmission at the MAC layer to improve link efficiency. In the control plane, the radio resource control (RRC) protocol layer may provide establishment, configuration, and maintenance of an RRC connection between a UE 115 and the base stations 105. The RRC protocol layer may also be used for core network 130 support of radio bearers for the user plane data. At the physical (PHY) layer, the transport channels may be mapped to physical channels.

The UEs 115 may be dispersed throughout the wireless communication system 100, and each UE 115 may be stationary or mobile. A UE 115 may also include or be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. A UE 115 may be a cellular phone, a personal digital assistant (PDA), a wireless modem, a wireless communication device, a handheld device, a tablet computer, a laptop computer, a cordless phone, a wireless local loop (WLL) station, an entertainment device, a vehicular component, or the like. A UE may be able to communicate with various types of base stations and network equipment including macro eNBs, small cell eNBs, relay base stations, and the like.

The communication links 125 shown in wireless communication system 100 may carry uplink (UL) transmissions from a UE 115 to a base station 105, or downlink (DL) transmissions, from a base station 105 to a UE 115. The downlink transmissions may also be called forward link transmissions while the uplink transmissions may also be called reverse link transmissions. Each communication link 125 may include one or more carriers, where each carrier may be a signal made up of multiple sub-carriers (e.g., waveform signals of different frequencies) modulated according to the various radio technologies described above. Each modulated signal may be sent on a different subcarrier and may carry control information (e.g., reference signals, control channels, etc.), overhead information, user data, etc. The communication links 125 may transmit bidirectional communications using frequency division duplex (FDD) (e.g., using paired spectrum resources) or time division duplex (TDD) operation (e.g., using unpaired spectrum resources). Frame structures may be defined for FDD (e.g., frame structure type 1) and TDD (e.g., frame structure type 2).

In aspects of the wireless communication system 100, base stations 105 or UEs 115 may include multiple antennas for employing antenna diversity schemes to improve communication quality and reliability between the base stations 105 and UEs 115. Additionally or alternatively, the base stations 105 or UEs 115 may employ multiple input multiple output (MIMO) techniques that may take advantage of multi-path environments to transmit multiple spatial layers carrying the same or different coded data.

Wireless communication system 100 may support operation on multiple cells or carriers, a feature which may be referred to as carrier aggregation (CA) or multi-carrier operation. A carrier may also be referred to as a component carrier (CC), a layer, a channel, etc. The terms "carrier," "component carrier," "cell," and "channel" may be used interchangeably herein. A UE 115 may be configured with multiple downlink CCs and one or more uplink CCs for carrier aggregation. Carrier aggregation may be used with both FDD and TDD component carriers.

In an example, a base station 105 may include a scheduling component 240 for scheduling resources to one or more UEs 115 to facilitate wireless communications with the UE 115, and the UE 115 may include a communicating component 340 for receiving the resource scheduling and accordingly communicating with the base station 105 over the resources. The scheduling component 240, for example, may be configured to transmit control data related to resources intended for communications using a wireless communication technology. In one example, the control data may indicate a delay value corresponding to a delay between a time division (e.g., a slot) during which a resource grant is received and a time division during which corresponding communications are to occur. The communicating component 340 can then, for example, receive the control data to determine the resources for communicating with the base station 105, which may include determining the delay value, and accordingly communicating with the base station 105 at a time division (e.g., slot) corresponding to the delay value as related to a time division during which the resource grant is received. In addition, the communicating component 340 may determine, based at least in part on the delay value, a time division (e.g., a symbol within a slot) for transmitting a reference signal.

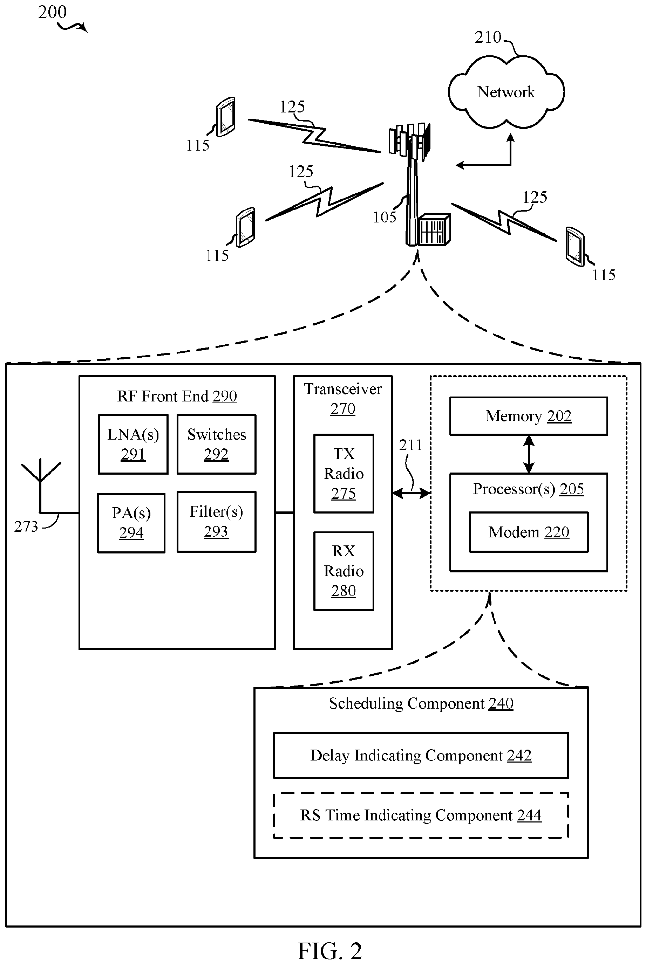

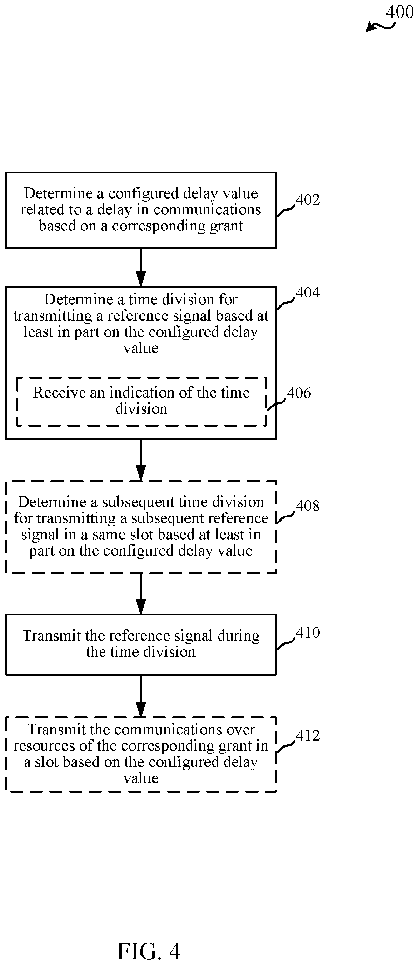

Turning now to FIGS. 2-8, aspects are depicted with reference to one or more components and one or more methods that may perform the actions or operations described herein, where aspects in dashed line may be optional. Although the operations described below in FIGS. 4-5 are presented in a particular order and/or as being performed by an example component, it should be understood that the ordering of the actions and the components performing the actions may be varied, depending on the implementation. Moreover, it should be understood that the following actions, functions, and/or described components may be performed by a specially-programmed processor, a processor executing specially-programmed software or computer-readable media, or by any other combination of a hardware component and/or a software component capable of performing the described actions or functions.

Referring to **FIG. 2**, a block diagram 200 is shown that includes a portion of a wireless communications system having multiple UEs 115 in communication with a base station 105 via communication links 125, where the base station 105 is also communicatively coupled with a network 210. The UEs 115 may be examples of the UEs described in the present disclosure that are configured to determine a delay value of a delay between receiving uplink grants and transmitting corresponding uplink communications, and to transmit a reference signal based on the delay value. Moreover the base station 105 may be an example of the base stations described in the present disclosure (e.g., eNB, gNB, etc.) that are configured to provide uplink resource grants to the UEs 115 and/or indicate the delay value to the UEs 115.

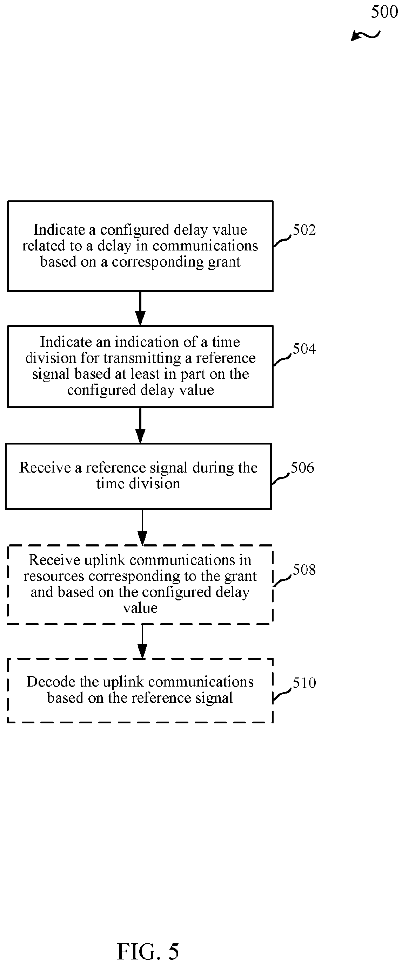

In an aspect, the base station in FIG. 2 may include one or more processors 205 and/or memory 202 that may operate in combination with a scheduling component 240 to perform the functions, methodologies (e.g., method 500 of FIG. 5), or other methods presented in the present disclosure, which may include scheduling communication resources for one or more UEs 115. In accordance with the present disclosure, the scheduling component 240 may include a delay indicating component 242 for indicating a delay value to one or more UEs 115 where the delay value corresponds to a delay between receiving a resource grant and performing corresponding communications, and an optional RS time indicating component 244 for indicating a time division (e.g., of a slot, such as a symbol) for the UE 115 to use in transmitting a reference signal.

The one or more processors 205 may include a modem 220 that uses one or more modem processors. The various functions related to the scheduling component 240, and/or sub-components thereof, may be included in modem 220 and/or processor 205 and, in an aspect, can be executed by a single processor, while in other aspects, different ones of the functions may be executed by a combination of two or more different processors. For example, in an aspect, the one or more processors 205 may include any one or any combination of a modem processor, or a baseband processor, or a digital signal processor, or a transmit processor, or a transceiver processor associated with transceiver 270, or a system-on-chip (SoC). In particular, the one or more processors 205 may execute functions and components included in the scheduling component 240.

In some examples, the scheduling component 240 and each of the sub-components may comprise hardware, firmware, and/or software and may be configured to execute code or perform instructions stored in a memory (e.g., a computer-readable storage medium, such as memory 202 discussed below). Moreover, in an aspect, the base station 105 in FIG. 2 may include a radio frequency (RF) front end 290 and transceiver 270 for receiving and transmitting radio transmissions to, for example, UEs 115. The transceiver 270 may coordinate with the modem 220 to receive signals for, or transmit signals generated by, the scheduling component 240 to the UEs 115. The RF front end 290 may be communicatively coupled with one or more antennas 273 and can include one or more switches 292, one or more amplifiers (e.g., power amplifiers (PAs) 294 and/or low-noise amplifiers 291), and one or more filters 293 for transmitting and receiving RF signals on uplink channels and downlink channels. In an aspect, the components of the RF front end 290 can be communicatively coupled with transceiver 270. The transceiver 270 may be communicatively coupled with the one or more of modem 220 and processors 205.

The transceiver 270 may be configured to transmit (e.g., via transmitter (TX) radio 275) and receive (e.g., via receiver (RX) radio 280) wireless signals through antennas 273 via the RF front end 290. In an aspect, the transceiver 270 may be tuned to operate at specified frequencies such that the base station 105 can communicate with, for example, UEs 115. In an aspect, for example, the modem 220 can configure the transceiver 270 to operate at a specified frequency and power level based on the configuration of the base station 105 and communication protocol used by the modem 220.

The base station 105 in FIG. 2 may further include a memory 202, such as for storing data used herein and/or local versions of applications or scheduling component 240 and/or one or more of its sub-components being executed by processor 205. Memory 202 can include any type of computer-readable medium usable by a computer or processor 205, such as random access memory (RAM), read only memory (ROM), tapes, magnetic discs, optical discs, volatile memory, non-volatile memory, and any combination thereof. In an aspect, for example, memory 202 may be a computer-readable storage medium that stores one or more computer-executable codes defining scheduling component 240 and/or one or more of its sub-components. Additionally or alternatively, the base station 105 may include a bus 211 for communicatively coupling one or more of the RF front end 290, the transceiver 274, the memory 202, or the processor 205, and to exchange signaling information between each of the components and/or sub-components of the base station 105.

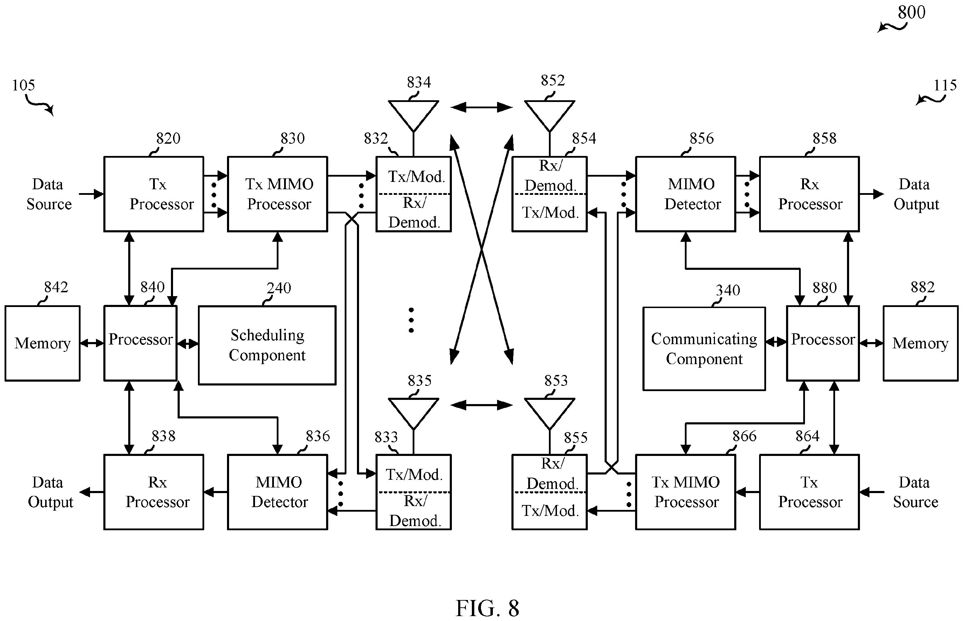

In an aspect, the processor(s) 205 may correspond to one or more of the processors described in connection with the base station in FIG. 8. Similarly, the memory 202 may correspond to the memory described in connection with the base station in FIG. 8.

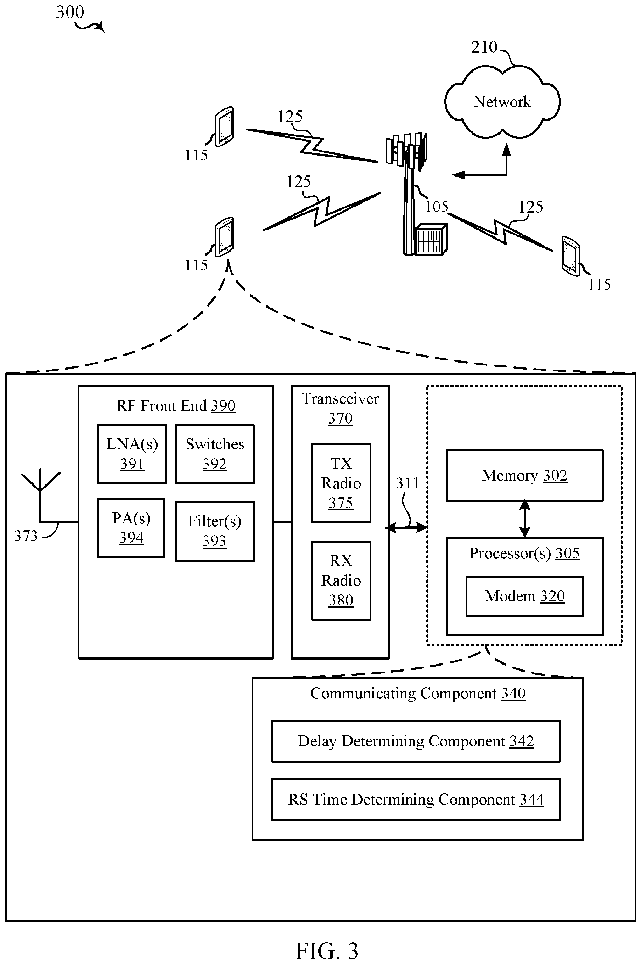

Referring to **FIG. 3**, a block diagram 300 is shown that includes a portion of a wireless communications system having multiple UEs 115 in communication with a base station 105 via communication links 125, where the base station 105 is also communicatively coupled with a network 210. The UEs 115 may be examples of the UEs described in the present disclosure that are configured to determine a delay value of a delay between receiving uplink grants and transmitting corresponding uplink communications, and to transmit a reference signal based on the delay value. Moreover the base station 105 may be an example of the base stations described in the present disclosure (e.g., eNB, gNB, etc.) that are configured to provide uplink resource grants to the UEs 115 and/or indicate the delay value to the UEs 115.

In an aspect, the UE 115 in FIG. 3 may include one or more processors 305 and/or memory 302 that may operate in combination with a communicating component 340 to perform the functions, methodologies (e.g., method 400 of FIG. 4), or other methods presented in the present disclosure. In accordance with the present disclosure, the communicating component 340 may include a delay determining component 342 for determining a delay value corresponding to a delay between receiving a resource grant and performing corresponding communications, and/or a RS time determining component 344 for determining a time division (e.g., of a slot, such as a symbol within the slot) for transmitting a RS based at least in part on the delay value.

The one or more processors 305 may include a modem 320 that uses one or more modem processors. The various functions related to the communicating component 340, and/or its sub-components, may be included in modem 320 and/or processor 305 and, in an aspect, can be executed by a single processor, while in other aspects, different ones of the functions may be executed by a combination of two or more different processors. For example, in an aspect, the one or more processors 305 may include any one or any combination of a modem processor, or a baseband processor, or a digital signal processor, or a transmit processor, or a transceiver processor associated with transceiver 370, or a system-on-chip (SoC). In particular, the one or more processors 305 may execute functions and components included in the communicating component 340.

In some examples, the communicating component 340 and each of the sub-components may comprise hardware, firmware, and/or software and may be configured to execute code or perform instructions stored in a memory (e.g., a computer-readable storage medium, such as memory 302 discussed below). Moreover, in an aspect, the UE 115 in FIG. 3 may include an RF front end 390 and transceiver 370 for receiving and transmitting radio transmissions to, for example, base stations 105. The transceiver 370 may coordinate with the modem 320 to receive signals that include the packets as received by the communicating component 340. The RF front end 390 may be communicatively coupled with one or more antennas 373 and can include one or more switches 392, one or more amplifiers (e.g., PAs 394 and/or LNAs 391), and one or more filters 393 for transmitting and receiving RF signals on uplink channels and downlink channels. In an aspect, the components of the RF front end 390 can be communicatively coupled with transceiver 370. The transceiver 370 may be communicatively coupled with one or more of modem 320 and processors 305.

The transceiver 370 may be configured to transmit (e.g., via transmitter (TX) radio 375) and receive (e.g., via receiver (RX) radio 380) wireless signals through antennas 373 via the RF front end 390. In an aspect, the transceiver 370 may be tuned to operate at specified frequencies such that the UE 115 can communicate with, for example, base stations 105. In an aspect, for example, the modem 320 can configure the transceiver 370 to operate at a specified frequency and power level based on the configuration of the UE 115 and communication protocol used by the modem 320.

The UE 115 in FIG. 3 may further include a memory 302, such as for storing data used herein and/or local versions of applications or communicating component 340 and/or one or more of its sub-components being executed by processor 305. Memory 302 can include any type of computer-readable medium usable by a computer or processor 305, such as RAM, ROM, tapes, magnetic discs, optical discs, volatile memory, non-volatile memory, and any combination thereof. In an aspect, for example, memory 302 may be a computer-readable storage medium that stores one or more computer-executable codes defining communicating component 340 and/or one or more of its sub-components. Additionally or alternatively, the UE 115 may include a bus 311 for communicatively coupling one or more of the RF front end 390, the transceiver 374, the memory 302, or the processor 305, and to exchange signaling information between each of the components and/or sub-components of the UE 115.

In an aspect, the processor(s) 305 may correspond to one or more of the processors described in connection with the UE in FIG. 8. Similarly, the memory 302 may correspond to the memory described in connection with the UE in FIG. 8.

**FIG. 4** illustrates a flow chart of an example of a method 400 for transmitting (e.g., by a UE) one or more reference signals based on a determined delay between receiving a resource grant and performing corresponding communications over the granted resources. In method 400, blocks indicated as dashed boxes may represent optional steps.

In method 400, at Block 402, a configured delay value related to a delay in communications based on a corresponding grant is determined. In an aspect, the delay determining component 342 can, e.g., in conjunction with processor(s) 305, memory 302, transceiver 370 and/or communicating component 340, determine the configured delay value related to the delay in communications based on the corresponding grant. According to the invention, the delay value is configured to indicate a delay to occur between receiving an uplink resource grant from a base station 105 and transmitting corresponding uplink communications to the base station 105. In one example, the delay value, which can also be referred to as K2, can be configured by the base station 105 for the UE 115 (e.g., in downlink control information (DCI) transmitted to the UE 115, etc.), stored in a configuration on the UE 115, hardcoded in memory 302 of the UE 115, etc. Thus delay determining component 342 receives the delay value from the base station 105 (e.g., in the DCI) and/or may obtain the delay value from a configuration in memory 302 of the UE 115.

In one example, the base station 105 can configure a set of possible delay values (e.g., via RRC or higher layer signaling) along with corresponding pointers or indices (e.g., as a field in DCI) used to indicate one of the possible delay values. In this example, delay determining component 342 can receive the configured delay value as an indication of the pointer or index to the set of values, and can determine the delay value in the set corresponding to the indicated pointer or index. According to the invention, the UE 115 uses this delay in transmitting uplink communications based on the received grant.

Typically, the communicating component 340 can receive an uplink grant from the base station 105, and based on the K2 value, the UE 115 can determine the delay (e.g., in terms of number of slots). In addition, the uplink grant indicates resources within the slot over which the UE 115 can transmit uplink communications, where the resources can include one or more symbols within the slot, one or more subcarriers within the one or more symbols, etc. The UE 115 then transmits corresponding uplink communications in a slot that is a number (K2) of slots from the slot during which the uplink grant is received (e.g., in the determined one or more symbols in the slot).

According to the invention, when K2 = 0, the communicating component 340 decodes the uplink grant and transmits corresponding data communications (e.g., physical uplink shared channel (PUSCH) communications, physical uplink control channel (PUCCH), etc.) in the same slot.

At Block 404, a time division for transmitting a reference signal can be determined based at least in part on the configured delay value. In an aspect, the RS time determining component 344 can, e.g., in conjunction with processor(s) 305, memory 302, transceiver 370 and/or communicating component 340, determine the time division for transmitting the reference signal based at least in part on the configured delay value. For example, RS time determining component 344 can determine the time division as an index or location of a time division within a larger time division (e.g., an index or location of a symbol, as the time division, within a slot, as the larger time division). Thus, for example, the time division for transmitting the reference signal may vary based on the configured delay value. Thus in the specific example above, the location of the reference signal (e.g., DM-RS) within an uplink slot can depend on the value of K2. In one example, instructions or parameters for determining the time division for transmitting the reference signal (e.g., based on the delay value or otherwise) may be configured for the UE 115 by the base station 105, specified in a configuration stored or hardcoded within memory 302 of the UE 115, a combination thereof, etc.

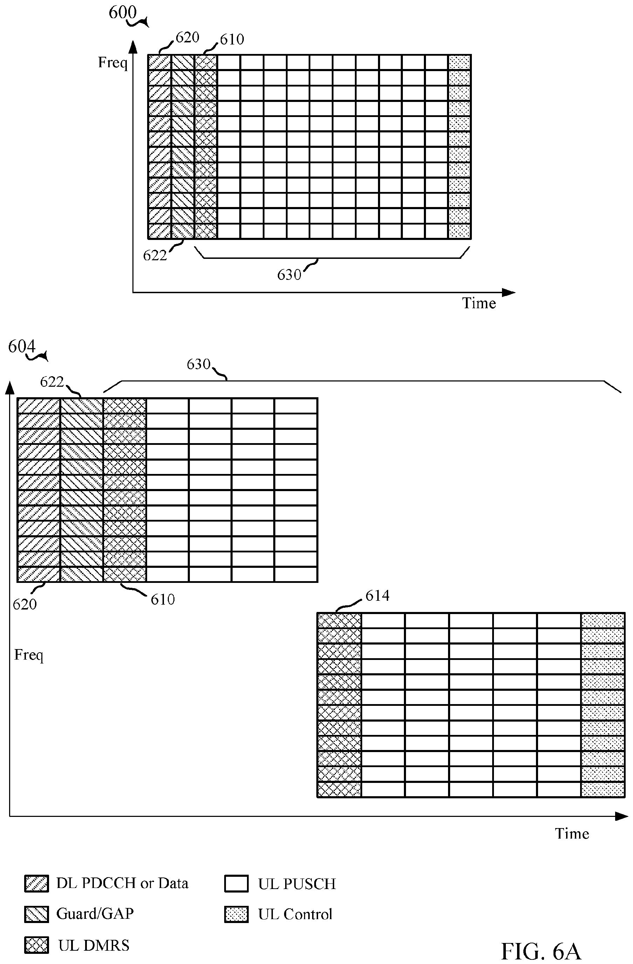

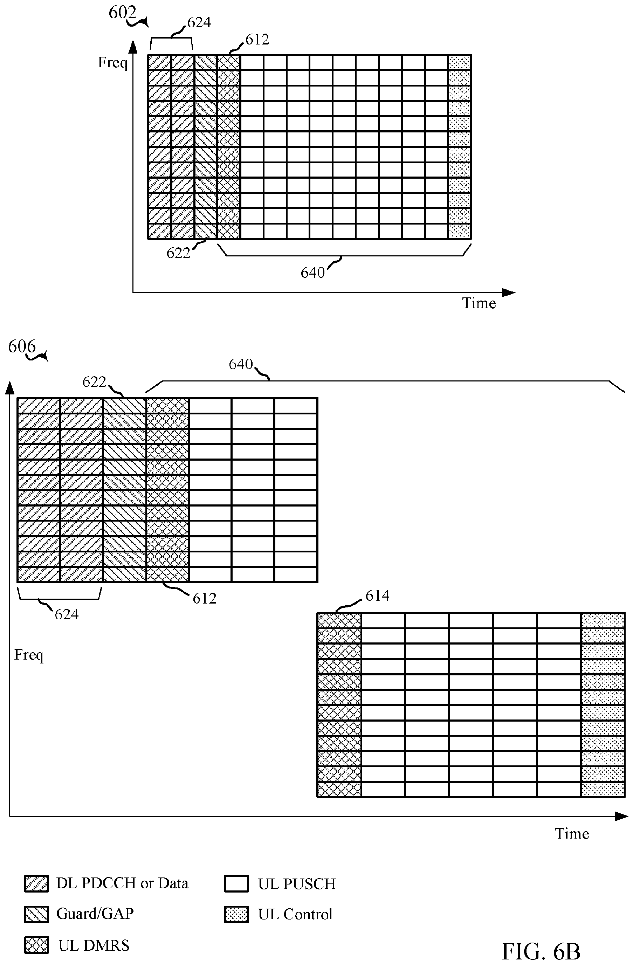

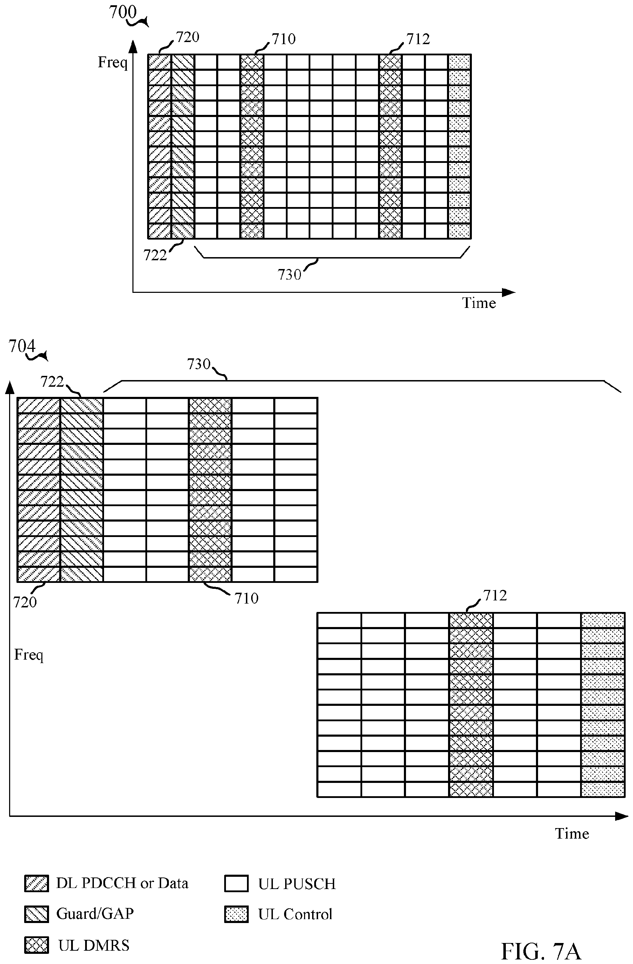

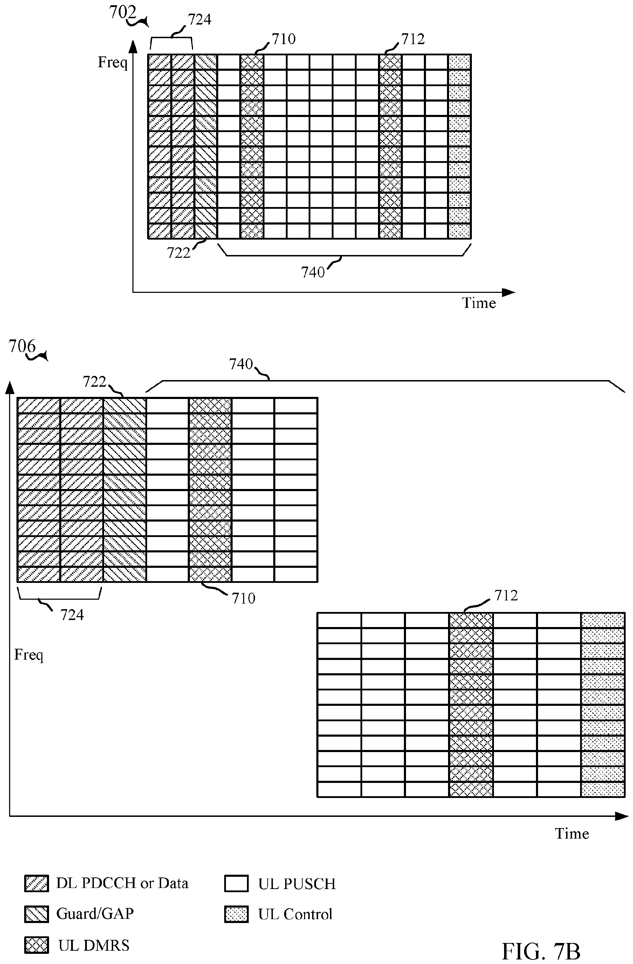

Examples are shown in FIGs. 6A, 6B, 7A, and 7B, which illustrate examples of resource allocations 600, 602, 604, 606, 700, 702, 704, 706, in portions of frequency (on the depicted vertical axes) over time (on the depicted horizontal axes), in accordance with aspects described herein. The resource allocations 600, 602, 604, 606, 700, 702, 704, 706 may each correspond to slots defined in 5G wireless communications, where each slot may include multiple symbols (e.g., 14 symbols, as depicted), and where the symbols may be OFDM symbols, SC-FDM symbols, etc. including a portion of frequency defined over a period of time, as described above. For example, FIGs. 6A and 6B may depict resource allocations where the configured delay value is 0 (e.g., where communicating component 340 transmits uplink communications in the same slot during which the uplink resource grant is received). Thus, in this example, delay determining component 342 determines the delay value (e.g., K2) = 0, and RS time determining component 344 can accordingly determine that a demodulation RS (DM-RS) is to be transmitted in a first uplink symbol in the slot (e.g., the same slot during which the resource grant is received). For example, the resource allocation 600 (in FIG. 6A) can include one downlink symbol 620, one guard symbol 622, and then a number of uplink symbols 630 in the slot. In this example, the first uplink symbol 610 is used for transmitting the DM-RS, and the RS time determining component 344 can determine to transmit the DM-RS in the first uplink symbol 610 based at least in part on delay determining component 342 determining that K2 = 0. Similarly, the resource allocation 602 (in FIG. 6B) can include two downlink symbols 624, one guard symbol 622, and then a number of uplink symbols 640. In this example, the first uplink symbol 612, though at a different absolute symbol index within the slot, can be determined and used for transmitting the DM-RS. In an example, RS time determining component 344 can determine the first uplink symbol in the slot based at least in part on a slot configuration received from the base station 105, or stored in memory 302 of the UE 115, etc., where the slot configuration can indicate which symbols of the slot are downlink symbols, uplink symbols, and/or guard symbols.

Additionally, for example, base station 105 may configure frequency hopping to be used in transmitting uplink communications from the UE 115 to the base station 105. In this example, communicating component 340 can transmit uplink communications to the base station 105 using different frequencies at different symbols within a slot, such as using a first frequency for a first half-slot, and a second frequency for a second half-slot. As shown in resource allocation 604 (in FIG. 6A), which includes one downlink symbol 620, one guard symbol 622, and a plurality of uplink symbols 630 in this example, RS time determining component 344 can determine that a DM-RS is to be transmitted on the first uplink symbol 610 of the first half-slot, and/or also on the first uplink symbol 614 of the second half-slot. In an example, RS time determining component 344 can determine the first uplink symbols in the half-slot(s) based at least in part on a slot configuration received from the base station 105, or stored in memory 302 of the UE 115, etc., where the slot configuration can indicate which symbols of the slot are downlink symbols, uplink symbols, and/or guard symbols. Similarly, as shown in resource allocation 606 (in FIG. 6B), which includes two downlink symbols 624, one guard symbol 622, and a plurality of uplink symbols 640 in this example, RS time determining component 344 can determine that a DM-RS is to be transmitted on the first uplink symbol 612 of the first half-slot, and/or also on the first uplink symbol 616 of the second half-slot.

In the above examples, as described with reference to FIGs. 6A and 6B, where the delay determining component 342 determines that K2 = 0, the RS time determining component 344 can determine to transmit a DM-RS in the first uplink symbol of a slot or half-slot depending on the slot configuration. For example the DM-RS can be at the beginning uplink portion of the slot regardless of downlink control duration in the slot. This can allow for extra processing time for the UE 115 to decode uplink grants and prepare uplink (e.g., PUSCH waveforms for transmission (e.g., since the communicating component 340 transmits DM-RS and not PUSCH waveforms in the first uplink symbol following the downlink control portion of the slot). In addition, this may result in a floating DM-RS location for a given slot based on the number of downlink and/or guard symbols (e.g., in a guard period) before the uplink portion of the slot. In any case, for example, RS time determining component 344 can determine the first uplink symbol in the slot based at least in part on a slot configuration received from the base station 105 or otherwise based on detecting the end of the downlink portion of the slot or the end of the guard period of the slot. In one example, RS time determining component 344 can determine the first uplink symbol as a symbol adjacent (in time) to a last symbol in a downlink portion of the slot, a symbol adjacent (in time) to a last symbol in a guard portion of the slot, etc.

For example, FIGs. 7A and 7B may depict resource allocations where the configured delay value is greater than 0 (e.g., where the communicating component 340 transmits uplink communications in a slot subsequent to a slot during which the resource grant is received). Thus, in this example, the delay determining component 342 determines the delay value (e.g., K2) > 0 (e.g., K2 = 1, K2 = 2, etc.), and the RS time determining component 344 can determine, based on determining K2 > 0, that a demodulation RS (DM-RS) is to be transmitted in a fixed symbol index within the slot (e.g., the slot during which the uplink grant is received, the slot during which the corresponding uplink communications are scheduled for transmission based on K2, or another slot). For example, the resource allocation 700 (in FIG. 7A) can include one downlink symbol 720, one guard symbol 722, and then a number of uplink symbols 730 in the slot, and the resource allocation 702 (in FIG. 7B) can include two downlink symbols 724, one guard symbol 722, and then a number of uplink symbols 740 in the slot. In either case, for example, symbol 710 (the fifth symbol) is used for transmitting the DM-RS, and symbol 712 (the eleventh symbol) can optionally be used for transmitting the DM-RS as well. According to the invention, the symbol locations are fixed regardless of the number of downlink and/or uplink symbols in the slot. In addition, in an example, the base station 105 may configure the symbol location(s) within the slots and/or the slots during which the UE 115 is to transmit DM-RS, as described further herein.

Additionally, for example, where the base station 105 configures frequency hopping, in the resource allocation 704 (in FIG. 7A), which includes one downlink symbol 720, one guard symbol 722, and a plurality of uplink symbols 730, and/or in the resource allocation 706 (in FIG. 7B), which includes two downlink symbols 724, one guard symbol 722, and a plurality of uplink symbols 740, the RS time determining component 344 can determine that a DM-RS is to be transmitted on the fifth symbol 710 of the first half-slot, and/or also on the eleventh symbol 712 (e.g., the fourth symbol of the second half-slot), where transmitting the DM-RS in the different half-slots can be scheduled over different frequency resources.

In the above examples, as described, where the delay determining component 342 determines that K2 > 0 (and/or equal to some specific value), the RS time determining component 344 can determine to transmit a DM-RS in the fixed symbol index/location(s) (e.g., the fifth symbol and/or the eleventh symbol of the slot). Transmitting the DM-RS at an absolute symbol index in this example can enhance uplink performance. For example, transmitting the DM-RS on the fifth and/or eleventh symbol may yield desirable results for channel estimation performance where at least five symbols are left between DM-RSs and one or two symbols outside of DM-RSs. In addition, to unify uplink and downlink DM-RS pattern, according to the invention, the uplink DM-RS is put on the same absolute DM-RS symbol indices as downlink symbols.

Referring to Figure 4, in one example, determining the time division at Block 404 may optionally include, at Block 406, receiving an indication of the time division. In an aspect, the RS time determining component 344 can, e.g., in conjunction with processor(s) 305, memory 302, transceiver 370 and/or communicating component 340, receive the indication of the time division. In one example, the RS time determining component 344 can receive the indication (e.g., as one or more symbol indices within a slot) from memory 302, which can have a hardcoded or otherwise configured time division, from a configuration sent by the base station 105 using direct signaling to the UE 115 (e.g., DCI, RRC or other higher layer configuration), from one or more SIBs transmitted by the base station 105, and/or the like. In another example, RS time determining component 344 can receive a set of indices of time divisions for transmitting reference signals from the base station 105 (e.g., via RRC signaling). For example, each value in the set can correspond to one or more values of K2, and RS time determining component 344 can determine the index of the time division for transmitting the reference signal based on the set and based on the determined value of K2. In one example, each value in the set of indices may be associated with a corresponding value of K2 (e.g., the symbol index indicated at the first value in the set can be used for K2 = 0, the symbol index indicated at the second value in the set can be used for K2 = 1, etc.). In another example, each value in the set of indices may be associated with a single value or range of values for K2. In any case, in an example, the RS time determining component 344 can determine to receive the indication or otherwise utilize the time division based on delay determining component 342 determining the delay value (e.g., as greater than 0 or equal to substantially any value). In one example, the delay determining component 342 may determine the time division based on the delay value (e.g., a mapping of delay values to symbol indices, a stored formula for computing the symbol index based on the delay value, etc.).

In method 400, optionally at Block 408, a subsequent time division for transmitting a subsequent reference signal in a same slot can be determined based at least in part on the configured delay value. In an aspect, the RS time determining component 344 can, e.g., in conjunction with processor(s) 305, memory 302, transceiver 370 and/or communicating component 340, determine the subsequent time division for transmitting the subsequent reference signal in the same slot based at least in part on the configured delay value. For example, the subsequent time division may correspond to another symbol within the slot (e.g., within another half-slot of the slot or otherwise) for transmitting the reference signal, as described above with reference to FIGs. 6A, 6B, 7A, and 7B. For example, the subsequent time division may correspond to another fixed symbol location corresponding to a given delay value, another floating symbol location for utilizing when frequency hopping, etc. In any case, the RS time determining component 344 can determine the subsequent time division as a symbol in the slot based on the delay value and/or based on one or more parameters stored in memory 302 (e.g., as hardcoded or otherwise configured), configured by base station 105, etc.

At Block 410, the reference signal can be transmitted during the time division. In an aspect, the communicating component 340 can, e.g., in conjunction with processor(s) 305, memory 302, and/or transceiver 370, transmit the reference signal during the time division. For example, the communicating component 340 can transmit the reference signal (e.g., DM-RS) during the symbol that corresponds to the determined symbol index or indices in a given slot.

Optionally, at Block 412, the communications can be transmitted over resources of the corresponding grant in a slot based on the configured delay value. In an aspect, the communicating component 340 can, e.g., in conjunction with processor(s) 305, memory 302, and/or transceiver 370, transmit the communications over resources of the corresponding grant in a slot based on the configured delay value. In an example, communicating component 340 can transmit the communications based on the transmitted RS to facilitate decoding of the communications by base station 105 based on the RS.

**FIG. 5** illustrates a flow chart of an example of a method 500 for indicating (e.g., by a base station) a delay value and/or a time division for transmitting reference signals. In method 500, blocks indicated as dashed boxes may represent optional steps.

In method 500, at Block 502, a configured delay value related to a delay in communications based on a corresponding grant can be indicated. In an aspect, the delay indicating component 242 can, e.g., in conjunction with processor(s) 205, memory 202, transceiver 270 and/or scheduling component 240, indicate the configured delay value related to the delay in communications based on the corresponding grant. As described, for example, the delay indicating component 242 can indicate the delay value in a configuration transmitted to the UE 115 (e.g., in DCI, etc.). Moreover, for example, the delay indicating component 242 can determine a delay value for a given UE (or for one or more UEs) based on various factors, such as a signal strength of signals from the UE or as reported by the UE for downlink signals or other signals received by the UE, link quality of a link with the UE, round trip time of signals sent to the UE and response signals received from the UE, buffer status report indicating an amount of data for transmission stored in a buffer of the UE, load at the base station 105, and/or the like. In an example, UEs having higher signal strength, better link quality, lower round trip time, etc., may be configured with lower delay values.

In method 500, at Block 504, an indication of a time division for transmitting a reference signal based at least in part on the configured delay value can be indicated. In an aspect, the RS time indicating component 244 can, e.g., in conjunction with processor(s) 205, memory 202, transceiver 270 and/or scheduling component 240, indicate the indication of the division for transmitting the reference signal, where the indicating is based at least in part on the configured delay value. For example, the indication of the time division can correspond to an index or location of the time division within a larger time division (e.g., an index of a symbol within a slot). In one example, the indicated time division can be used for certain delay values (e.g., when the delay value is greater than zero, and/or for a configured delay value or range of values), but perhaps not other values (e.g., when the delay value equals zero). In one example, the base station 105 can configure one or more parameters related to using the indication of the time division in conjunction with the configured delay value, etc.

In one example, RS time indicating component 244 can directly signal (e.g., using DCI or other dedicated signaling to the UE 115, RRC or other higher layer signaling, SIB signals, etc.) an index of a symbol over which the UE 115 is to transmit the reference signal. In this example, the UE 115 can utilize the symbol in the directly signaled index when transmitting the reference signal. In another example, RS time indicating component 244 can signal a set of indices of symbols for transmitting reference signals (e.g., via RRC signaling), where each value in the set can correspond to one or more values of K2. In one example, each value in the set of indices may be associated with a corresponding value of K2 or a ranges of values of K2 (e.g., the symbol index indicated at the first value in the set can be used for K2 = 0, the symbol index indicated at the second value in the set can be used for K2 = 1, etc.).

In method 500, at Block 506, a reference signal can be received during the time division. In an aspect, the scheduling component 240 can, e.g., in conjunction with processor(s) 205, memory 202, and/or transceiver 270, can receive the reference signal during the time division. For example, the scheduling component 240 can receive a DM-RS during the time division (e.g., the symbol of the slot as indicated by RS time indicating component 244), and can accordingly demodulate communications from the UE 115 in the slot (e.g., or half-slot or other portion of the slot) based on the DM-RS.

Thus, for example, optionally at Block 508, uplink communications can be received (e.g., from the UE 115) in resources corresponding to the grant and based on the configured delay value. In an aspect, the scheduling component 240 can, e.g., in conjunction with processor(s) 205, memory 202, and/or transceiver 270, can receive the uplink communications in the resources corresponding to the grant and based on the configured delay value (e.g., in a symbol that is offset from the symbol during which the resource grant is transmitted by the delay value). In addition, in this example, optionally at Block 510, the uplink communications can be decoded based on the reference signal. In an aspect, the scheduling component 240 can, e.g., in conjunction with processor(s) 205, memory 202, and/or transceiver 270, can decode the uplink communications based on the reference signal. For example, the scheduling component 240 can determine the uplink communications as received in the resources specified in the resource grant and in a slot determined based on the configured delay value, and can use the reference signal received in the slot or a previous slot, as described, to perform channel estimation or other processing to interpret the uplink communications.

**FIG. 8** is a block diagram of a MIMO communication system 800 including a base station 105 and a UE 115. The MIMO communication system 800 may illustrate aspects of the wireless communication system 100 described with reference to FIG. 1. The base station 105 may be an example of aspects of the base station 105 described with reference to FIGs. 1-3. The base station 105 may be equipped with antennas 834 and 835, and the UE 115 may be equipped with antennas 852 and 853. In the MIMO communication system 800, the base station 105 may be able to send data over multiple communication links at the same time. Each communication link may be called a "layer" and the "rank" of the communication link may indicate the number of layers used for communication. For example, in a 2x2 MIMO communication system where base station 105 transmits two "layers," the rank of the communication link between the base station 105 and the UE 115 is two.

At the base station 105, a transmit (Tx) processor 820 may receive data from a data source. The transmit processor 820 may process the data. The transmit processor 820 may also generate control symbols or reference symbols. A transmit MIMO processor 830 may perform spatial processing (e.g., precoding) on data symbols, control symbols, or reference symbols, if applicable, and may provide output symbol streams to the transmit modulator/demodulators 832 and 833. Each modulator/demodulator 832 through 833 may process a respective output symbol stream (e.g., for OFDM, etc.) to obtain an output sample stream. Each modulator/demodulator 832 through 833 may further process (e.g., convert to analog, amplify, filter, and upconvert) the output sample stream to obtain a DL signal. In one example, DL signals from modulator/demodulators 832 and 833 may be transmitted via the antennas 834 and 835, respectively.

The UE 115 may be an example of aspects of the UEs 115 described with reference to FIGs. 1-3. At the UE 115, the UE antennas 852 and 853 may receive the DL signals from the base station 105 and may provide the received signals to the modulator/demodulators 854 and 855, respectively. Each modulator/demodulator 854 through 855 may condition (e.g., filter, amplify, downconvert, and digitize) a respective received signal to obtain input samples. Each modulator/demodulator 854 through 855 may further process the input samples (e.g., for OFDM, etc.) to obtain received symbols. A MIMO detector 856 may obtain received symbols from the modulator/demodulators 854 and 855, perform MIMO detection on the received symbols, if applicable, and provide detected symbols. A receive (Rx) processor 858 may process (e.g., demodulate, deinterleave, and decode) the detected symbols, providing decoded data for the UE 115 to a data output, and provide decoded control information to a processor 880, or memory 882.

The processor 880 may in some cases execute stored instructions to instantiate a communicating component 340 (see e.g., FIGS. 1 and 3).

On the uplink (UL), at the UE 115, a transmit processor 864 may receive and process data from a data source. The transmit processor 864 may also generate reference symbols for a reference signal. The symbols from the transmit processor 864 may be precoded by a transmit MIMO processor 866 if applicable, further processed by the modulator/demodulators 854 and 855 (e.g., for SC-FDMA, etc.), and be transmitted to the base station 105 in accordance with the communication parameters received from the base station 105. At the base station 105, the UL signals from the UE 115 may be received by the antennas 834 and 835, processed by the modulator/demodulators 832 and 833, detected by a MIMO detector 836 if applicable, and further processed by a receive processor 838. The receive processor 838 may provide decoded data to a data output and to the processor 840 or memory 842.

The processor 840 may in some cases execute stored instructions to instantiate a scheduling component 240 (see e.g., FIGS. 1 and 2).

The components of the UE 115 may, individually or collectively, be implemented with one or more ASICs adapted to perform some or all of the applicable functions in hardware. Each of the noted modules may be a means for performing one or more functions related to operation of the MIMO communication system 800. Similarly, the components of the base station 105 may, individually or collectively, be implemented with one or more ASICs adapted to perform some or all of the applicable functions in hardware. Each of the noted components may be a means for performing one or more functions related to operation of the MIMO communication system 800.

The above detailed description set forth above in connection with the appended drawings describes examples and does not represent the only examples that may be implemented or that are within the scope of the claims. The term "example," when used in this description, means "serving as an example, instance, or illustration," and not "preferred" or "advantageous over other examples." The detailed description includes specific details for the purpose of providing an understanding of the described techniques. These techniques, however, may be practiced without these specific details. In some instances, well-known structures and apparatuses are shown in block diagram form in order to avoid obscuring the concepts of the described examples.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, computer-executable code or instructions stored on a computer-readable medium, or any combination thereof.

The various illustrative blocks and components described in connection with the disclosure herein may be implemented or performed with a specially-programmed device, such as but not limited to a processor, a digital signal processor (DSP), an ASIC, a FPGA or other programmable logic device, a discrete gate or transistor logic, a discrete hardware component, or any combination thereof designed to perform the functions described herein. A specially-programmed processor may be a microprocessor, but in the alternative, the processor may be any conventional processor, controller, microcontroller, or state machine. A specially-programmed processor may also be implemented as a combination of computing devices, e.g., a combination of a DSP and a microprocessor, multiple microprocessors, one or more microprocessors in conjunction with a DSP core, or any other such configuration.

The functions described herein may be implemented in hardware, software executed by a processor, firmware, or any combination thereof. If implemented in software executed by a processor, the functions may be stored on or transmitted over as one or more instructions or code on a non-transitory computer-readable medium. Other examples and implementations are within the scope and spirit of the disclosure and appended claims. For example, due to the nature of software, functions described above can be implemented using software executed by a specially programmed processor, hardware, firmware, hardwiring, or combinations of any of these. Features implementing functions may also be physically located at various positions, including being distributed such that portions of functions are implemented at different physical locations. Also, as used herein, including in the claims, "or" as used in a list of items prefaced by "at least one of' indicates a disjunctive list such that, for example, a list of "at least one of A, B, or C" means A or B or C or AB or AC or BC or ABC (i.e., A and B and C).

Computer-readable media includes both computer storage media and communication media including any medium that facilitates transfer of a computer program from one place to another. A storage medium may be any available medium that can be accessed by a general purpose or special purpose computer. By way of example, and not limitation, computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk and Blu-ray disc where disks usually reproduce data magnetically, while discs reproduce data optically with lasers. Combinations of the above are also included within the scope of computer-readable media.

The previous description of the disclosure is provided to enable a person skilled in the art to make or use the disclosure.

Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A method for transmitting a demodulation reference signal, DM-RS, in wireless communications, performed by a user equipment and comprising:
receiving an indication of a configured delay value as a delay of a number of slots between receiving a corresponding resource grant and transmitting uplink communications over resources indicated by the corresponding resource grant;
determining (404), based at least in part on the configured delay value, a symbol of a slot for transmitting the DM-RS for the communications, wherein:
when the configured delay value indicates transmitting the communications in the same slot during which the corresponding resource grant is received, the symbol of the slot for transmitting the DM-RS is determined to be a first symbol (610; 612) of an uplink portion of the slot; and
when the configured delay value indicates transmitting the communications in a subsequent slot to receiving the corresponding resource grant, the symbol of the slot for transmitting the DM-RS is determined to be a symbol (710) of fixed location regardless of the number of downlink or uplink symbols in the slot, wherein the fixed location is the same absolute DM-RS symbol index as used for downlink DM-RS symbols; and
transmitting (410) the DM-RS during the determined symbol of the slot.

2. The method of claim 1, wherein determining the first symbol of the uplink portion of the slot comprises determining the first symbol as adjacent to a last symbol in a downlink portion of the slot or as adjacent to a last symbol in a guard period following the downlink portion of the slot.

3. The method of claim 1, further comprising:
determining a subsequent symbol of the slot for transmitting the DM-RS at a different frequency portion than used for transmitting the DM-RS during the determined symbol of the slot, wherein determining the subsequent symbol of the slot comprises determining another first symbol of another uplink portion of the slot corresponding to the different frequency portion; and
transmitting the DM-RS during the subsequent symbol of the slot.

4. The method of claim 1, further comprising receiving, from a base station, an indication of an index of the fixed symbol location.

5. The method of claim 1, further comprising:
determining, based on the determining that the configured delay value indicates transmitting the communications in the subsequent slot, a subsequent symbol of the slot as another fixed symbol index of the slot for optionally transmitting the DM-RS; and
transmitting the DM-RS during the subsequent symbol of the slot.

6. An apparatus for transmitting a demodulation reference signal, DM-RS, in wireless communications, comprising:
means for receiving an indication of a configured delay value as a delay of a number of slots between receiving a corresponding resource grant and transmitting uplink communications over resources indicated by the corresponding resource grant;
means (344) for determining (404), based at least in part on the configured delay value, a symbol of a slot for transmitting a demodulation reference signal, DM-RS, for the communications, wherein the means for determining is configured to:
determine the symbol of the slot for transmitting the DM-RS to be a first symbol (610; 612) of an uplink portion of the slot when the configured delay value indicates transmitting the communications in the same slot during which the corresponding resource grant is received; and
determine the symbol of the slot for transmitting the DM-RS to be a symbol (710) of fixed location regardless of the number of downlink or uplink symbols in the slot when the configured delay value indicates transmitting the communications in a subsequent slot to receiving the corresponding resource grant,
wherein the fixed location is the same absolute DM-RS symbol index as used for downlink DM-RS symbols; and
means for transmitting (410) the DM-RS during the determined symbol of the slot.

7. The apparatus of claim 6, wherein the means for determining the first symbol of the uplink portion of the slot determines the first symbol as adjacent to a last symbol in a downlink portion of the slot or as adjacent to a last symbol in a guard period
following the downlink portion of the slot.

8. The apparatus of claim 6, further comprising:
means for determining a subsequent symbol of the slot for transmitting the DM-RS at a different frequency portion than used for transmitting the DM-RS during the
determined symbol of the slot, wherein the means for determining the subsequent symbol of the slot determines another first symbol of another uplink portion of the slot corresponding to the different frequency portion; and
means for transmitting the DM-RS during the subsequent symbol of the slot.

9. The apparatus of claim 6, further comprising means for receiving, from a base station, an indication of an index of the fixed symbol location.

10. The apparatus of claim 6, further comprising:
means for determining, based on the determining that the configured delay value indicates transmitting the communications in the subsequent slot, a subsequent symbol of the slot as another fixed symbol index of the slot for transmitting the DM-RS; and
means for transmitting the DM-RS during the subsequent symbol of the slot.

11. A method for configuring transmission of a demodulation reference signal, DM-RS, in wireless communications, performed by a base station and comprising:
indicating (502), to a user equipment, UE, (115) a configured delay value as a delay of a number of slots between receiving a corresponding resource grant and transmitting uplink communications over resources indicated by the corresponding resource grant;
indicating (504), to the UE (115), an indication of a fixed symbol index for transmitting the DM-RS, wherein the fixed location is the same absolute DM-RS symbol index as used for downlink DM-RS symbols; and
receiving (506) at least the DM-RS from the UE (115), wherein:
the DM-RS is received in a symbol (710) of a slot corresponding to the fixed symbol index when the configured delay value indicates transmitting the communications in a subsequent slot to receiving the corresponding resource grant; and
the DM-RS is received in a first symbol (610; 612) of an uplink portion of the slot when the configured delay value indicates transmitting the communications in the same slot during which the corresponding resource grant is received.

12. An apparatus for configuring transmission of a demodulation reference signal, DM-RS, in wireless communications, comprising:
means (242) for indicating (502), to a user equipment, UE, a configured delay value as a delay of a number of slots between receiving a corresponding resource grant and transmitting uplink communications over resources indicated by the corresponding resource grant;
means (244) for indicating (504), to the UE, an indication of a fixed symbol index for transmitting the DMRS, wherein the fixed location is the same absolute DM-RS symbol index as used for downlink DM-RS symbols; and
means (280) for receiving (506) at least the reference signal from the UE, wherein the means for receiving is configured to receive the DM-RS:
in a symbol (710) of a slot corresponding to the fixed symbol index when the configured delay value indicates transmitting the communications in a subsequent slot to receiving the corresponding resource grant; and
in a first symbol (610; 612) of an uplink portion of the slot when the configured delay value indicates transmitting the communications in the same slot during which the corresponding resource grant is received.

13. A computer-readable medium, comprising processor-executable code that, when executed by one or more processors of a wireless communication apparatus, cause the wireless communication apparatus to perform the method of any one of claims 1-5.

14. A computer-readable medium, comprising processor-executable code that, when executed by one or more processors of a wireless communication apparatus, cause the wireless communication apparatus to perform the method of claim 11.

## Patentansprüche

1. Ein Verfahren zum Senden eines Demodulationsreferenzsignals (DM-RS) in drahtlosen Kommunikationen, das durch ein Benutzergerät durchgeführt wird, aufweisend:
Empfangen einer Angabe eines konfigurierten Verzögerungswerts als einer Verzögerung von einer Anzahl von Schlitzen zwischen dem Empfangen einer entsprechenden Ressourcengewährung und dem Senden von Aufwärtsstreckekommunikationen über durch die entsprechende Ressourcengewährung angegebene Ressourcen,
Bestimmen (404), basierend wenigstens teilweise auf dem konfigurierten Verzögerungswert, eines Symbols eines Schlitzes für das Senden des DM-RS für die Kommunikationen, wobei:
wenn der konfigurierte Verzögerungswert das Senden der Kommunikationen in dem gleichen Schlitz, in dem die entsprechende Ressourcengewährung empfangen wird, angibt, das Symbol des Schlitzes für das Senden des DM-RS als ein erstes Symbol (610; 612) eines Aufwärtsstrecketeils des Schlitzes bestimmt wird, und
wenn der konfigurierte Verzögerungswert das Senden der Kommunikationen in einem auf das Empfangen der entsprechenden Ressourcengewährung folgenden Schlitz angibt, das Symbol des Schlitzes für das Senden des DM-RS als ein Symbol (710) einer fixen Position unabhängig von der Anzahl von Abwärtsstrecke- oder Aufwärtsstreckesymbolen in dem Schlitz bestimmt wird, wobei die fixe Position der gleiche absolute DM-RS-Symbolindex wie der für Abwärtsstrecke-DM-RS-Symbole verwendete ist, und
Senden (410) des DM-RS während des bestimmten Symbols des Schlitzes.

2. Verfahren nach Anspruch 1, wobei das Bestimmen des ersten Symbols des Aufwärtsstrecketeils des Schlitzes das Bestimmen des ersten Symbols als benachbart zu einem letzten Symbol in einem Abwärtsstrecketeil des Schlitzes oder als benachbart zu einem letzten Symbol in einer auf den Abwärtsstrecketeil des Schlitzes folgenden Schutzperiode aufweist.

3. Verfahren nach Anspruch 1, das weiterhin aufweist:
Bestimmen eines folgenden Symbols des Schlitzes für das Senden des DM-RS in einem anderen Frequenzteil als dem für das Senden des DM-RS während des bestimmten Symbols des Schlitzes verwendeten, wobei das Bestimmen des folgenden Symbols des Schlitzes das Bestimmen eines anderen ersten Symbols eines anderen Aufwärtsstrecketeils des Schlitzes in Entsprechung zu dem anderen Frequenzteil aufweist, und
Senden des DM-RS während des folgenden Symbols des Schlitzes.

4. Verfahren nach Anspruch 1, das weiterhin das Empfangen, von einer Basisstation, einer Angabe eines Index der fixen Symbolposition aufweist.

5. Verfahren nach Anspruch 1, das weiterhin aufweist:
Bestimmen, basierend auf dem Bestimmen, dass der konfigurierte Verzögerungswert das Senden der Kommunikationen in dem folgenden Schlitz angibt, eines folgenden Symbols des Schlitzes als eines anderen fixen Symbolindex des Schlitzes für das optionale Senden des DM-RS, und
Senden des DM-RS während des folgenden Symbols des Schlitzes.

6. Eine Vorrichtung zum Senden eines Demodulationsreferenzsignals (DM-RS) in drahtlosen Kommunikationen, aufweisend:
Mittel zum Empfangen einer Angabe eines konfigurierten Verzögerungswerts als einer Verzögerung von einer Anzahl von Schlitzen zwischen dem Empfangen einer entsprechenden Ressourcengewährung und dem Senden von Aufwärtsstreckekommunikationen über durch die entsprechende Ressourcengewährung angegebene Ressourcen,
Mittel (344) zum Bestimmen (404), basierend wenigstens teilweise auf dem konfigurierten Verzögerungswert, eines Symbols eines Schlitzes für das Senden des DM-RS für die Kommunikationen, wobei die Mittel zum Bestimmen konfiguriert sind zum:
Bestimmen des Symbols des Schlitzes für das Senden des DM-RS als eines ersten Symbols (610; 612) eines Aufwärtsstrecketeils des Schlitzes, wenn der konfigurierte Verzögerungswert das Senden der Kommunikationen in dem gleichen Schlitz, in dem die entsprechende Ressourcengewährung empfangen wird, angibt, und
Bestimmen des Symbols des Schlitzes für das Senden des DM-RS als eines Symbols (710) einer fixen Position unabhängig von der Anzahl von Abwärtsstrecke- oder Aufwärtsstreckesymbolen in dem Schlitz, wenn der konfigurierte Verzögerungswert das Senden der Kommunikationen in einem auf das Empfangen der entsprechenden Ressourcengewährung folgenden Schlitz angibt, wobei die fixe Position der gleiche absolute DM-RS-Symbolindex wie der für Abwärtsstrecke-DM-RS-Symbole verwendete ist, und
Mittel zum Senden (410) des DM-RS während des bestimmten Symbols des Schlitzes.

7. Vorrichtung nach Anspruch 6, wobei die Mittel zum Bestimmen des ersten Symbols des Aufwärtsstrecketeils des Schlitzes das erste Symbol als benachbart zu einem letzten Symbol in einem Abwärtsstrecketeil des Schlitzes oder als benachbart zu einem letzten Symbol in einer auf den Abwärtsstrecketeil des Schlitzes folgenden Schutzperiode bestimmen.

8. Vorrichtung nach Anspruch 6, die weiterhin aufweist:
Mittel zum Bestimmen eines folgenden Symbols des Schlitzes für das Senden des DM-RS in einem anderen Frequenzteil als dem für das Senden des DM-RS während des bestimmten Symbols des Schlitzes verwendeten, wobei die Mittel zum Bestimmen des folgenden Symbols des Schlitzes ein anderes erstes Symbol eines anderen Aufwärtsstrecketeils des Schlitzes in Entsprechung zu dem anderen Frequenzteil bestimmen, und
Mittel zum Senden des DM-RS während des folgenden Symbols des Schlitzes.

9. Vorrichtung nach Anspruch 6, die weiterhin Mittel zum Empfangen, von einer Basisstation, einer Angabe eines Index der fixen Symbolposition aufweist.

10. Vorrichtung nach Anspruch 6, die weiterhin aufweist:
Mittel zum Bestimmen, basierend auf dem Bestimmen, dass der konfigurierte Verzögerungswert das Senden der Kommunikationen in dem folgenden Schlitz angibt, eines folgenden Symbols des Schlitzes als eines anderen fixen Symbolindex des Schlitzes für das Senden des DM-RS, und
Mittel zum Senden des DM-RS während des folgenden Symbols des Schlitzes.

11. Ein Verfahren für das Konfigurieren einer Sendung eines Demodulationsreferenzsignals (DM-RS) in drahtlosen Kommunikationen, das durch eine Basisstation durchgeführt wird, aufweisend:
Angeben (502), für ein Benutzergerät (User Equipment bzw. UE) (115), eines konfigurierten Verzögerungswerts als einer Verzögerung von einer Anzahl von Schlitzen zwischen dem Empfangen einer entsprechenden Ressourcengewährung und dem Senden von Aufwärtsstreckekommunikationen über durch die entsprechende Ressourcengewährung angegebene Ressourcen,
Angeben (504), für das UE (115), einer Angabe eines fixen Symbolindex für das Senden des DM-RS, wobei die fixe Position der gleiche absolute DM-RS-Symbolindex wie der für die Abwärtsstrecke-DM-RS-Symbole verwendete ist, und
Empfangen (506) wenigstens des DM-RS von dem UE (115), wobei:
das DM-RS in einem Symbol (710) eines Schlitzes in Entsprechung zu dem fixen Symbolindex empfangen wird, wenn der konfigurierte Verzögerungswert das Senden der Kommunikationen in einem auf das Empfangen der entsprechenden Ressourcengewährung folgenden Schlitz angibt, und
das DM-RS in einem ersten Symbol (610; 612) eines Aufwärtsstrecketeils des Schlitzes empfangen wird, wenn der konfigurierte Verzögerungswert das Senden der Kommunikationen in dem gleichen Schlitz, in dem die entsprechende Ressourcengewährung empfangen wird, angibt.

12. Eine Vorrichtung für das Konfigurieren einer Sendung eines Demodulationsreferenzsignals (DM-RS) in drahtlosen Kommunikationen, aufweisend:
Mittel (242) zum Angeben (502), für ein Benutzergerät (User Equipment bzw. UE), eines konfigurierten Verzögerungswerts als einer Verzögerung von einer Anzahl von Schlitzen zwischen dem Empfangen einer entsprechenden Ressourcengewährung und dem Senden von Aufwärtsstreckekommunikationen über durch die entsprechende Ressourcengewährung angegebene Ressourcen,
Mittel (244) zum Angeben (504), für das UE, einer Angabe eines fixen Symbolindex für das Senden des DM-RS, wobei die fixe Position der gleiche absolute DM-RS-Symbolindex wie der für die Abwärtsstrecke-DM-RS-Symbole verwendete ist, und
Mittel (280) zum Empfangen (506) wenigstens des Referenzsignals von dem UE, wobei die Mittel zum Empfangen konfiguriert sind zum Empfangen des DM-RS:
in einem Symbol (710) eines Schlitzes in Entsprechung zu dem fixen Symbolindex, wenn der konfigurierte Verzögerungswert das Senden der Kommunikationen in einem auf das Empfangen der entsprechenden Ressourcengewährung folgenden Schlitz angibt, und
in einem ersten Symbol (610; 612) eines Aufwärtsstrecketeils des Schlitzes, wenn der konfigurierte Verzögerungswert das Senden der Kommunikationen in dem gleichen Schlitz, in dem die entsprechende Ressourcengewährung empfangen wird, angibt.

13. Ein computerlesbares Medium mit einem prozessorausführbaren Code, der bei einer Ausführung durch einen oder mehrere Prozessoren einer drahtlosen Kommunikationsvorrichtung veranlasst, dass die drahtlose Kommunikationsvorrichtung das Verfahren gemäß den Ansprüchen 1 bis 5 durchführt.

14. Ein computerlesbares Medium mit einem prozessorausführbaren Code, der bei einer Ausführung durch einen oder mehrere Prozessoren einer drahtlosen Kommunikationsvorrichtung veranlasst, dass die drahtlose Kommunikationsvorrichtung das Verfahren gemäß dem Anspruch 11 durchführt.

## Revendications

1. Procédé de transmission d'un signal de référence de démodulation, DM-RS, dans des communications sans fil, réalisé par un équipement d'utilisateur et comprenant :
une réception d'une indication d'une valeur de retard configurée à titre de retard d'un certain nombre de créneaux entre une réception d'un octroi de ressources correspondant et une transmission de communications de liaison montante sur des ressources indiquées par l'octroi de ressources correspondant ;
une détermination (404), sur la base au moins en partie de la valeur de retard configurée, d'un symbole d'un créneau pour une transmission du DM-RS pour les communications, dans lequel :
lorsque la valeur de retard configurée indique une transmission des communications dans le même créneau pendant lequel l'octroi de ressources correspondant est reçu, le symbole du créneau pour une transmission du DM-RS est déterminé comme étant un premier symbole (610 ; 612) d'une partie de liaison montante du créneau ; et
lorsque la valeur de retard configurée indique une transmission des communications dans un créneau subséquent à une réception de l'octroi de ressources correspondant, le symbole du créneau pour une transmission du DM-RS est déterminé comme étant un symbole (710) d'emplacement fixe indépendamment du nombre de symboles de liaison descendante ou de liaison montante dans le créneau, dans lequel l'emplacement fixe est le même indice de symbole de DM-RS absolu qu'utilisé pour des symboles de DM-RS de liaison descendante ; et
une transmission (410) du DM-RS pendant le symbole déterminé du créneau.

2. Procédé selon la revendication 1, dans lequel une détermination du premier symbole de la partie de liaison montante du créneau comprend une détermination du premier symbole comme adjacent à un dernier symbole dans une partie de liaison descendante du créneau ou comme adjacent à un dernier symbole dans une période de garde suivant la partie de liaison descendante du créneau.

3. Procédé selon la revendication 1, comprenant en outre :
une détermination d'un symbole subséquent du créneau pour une transmission du DM-RS au niveau d'une partie à fréquence différente que celle utilisée pour une transmission du DM-RS pendant le symbole déterminé du créneau, dans lequel une détermination du symbole subséquent du créneau comprend une détermination d'un autre premier symbole d'une autre partie de liaison montante du créneau correspondant à la partie à fréquence différente ; et
une transmission du DM-RS pendant le symbole subséquent du créneau.

4. Procédé selon la revendication 1, comprenant en outre une réception, à partir d'une station de base, d'une indication d'un indice de l'emplacement de symbole fixe.

5. Procédé selon la revendication 1, comprenant en outre :
une détermination, sur la base de la détermination du fait que la valeur de retard configurée indique une transmission des communications dans le créneau subséquent, d'un symbole subséquent du créneau à titre d'autre indice de symbole fixe du créneau pour une transmission éventuelle du DM-RS ; et
une transmission du DM-RS pendant le symbole subséquent du créneau.

6. Appareil pour une transmission d'un signal de référence de démodulation, DM-RS, dans des communications sans fil, comprenant :
un moyen de réception d'une indication d'une valeur de retard configurée à titre de retard d'un certain nombre de créneaux entre une réception d'un octroi de ressources correspondant et une transmission de communications de liaison montante sur des ressources indiquées par l'octroi de ressources correspondant ;
un moyen (344) de détermination (404), sur la base au moins en partie de la valeur de retard configurée, d'un symbole d'un créneau pour une transmission d'un signal de référence de démodulation, DM-RS, pour les communications, dans lequel le moyen de détermination est configuré pour :
déterminer le symbole du créneau pour une transmission du DM-RS comme étant un premier symbole (610 ; 612) d'une partie de liaison montante du créneau lorsque la valeur de retard configurée indique une transmission des communications dans le même créneau pendant lequel l'octroi de ressources correspondant est reçu ; et
déterminer le symbole du créneau pour une transmission du DM-RS comme étant un symbole (710) d'emplacement fixe indépendamment du nombre de symboles de liaison descendante ou de liaison montante dans le créneau lorsque la valeur de retard configurée indique une transmission des communications dans un créneau subséquent à une réception de l'octroi de ressources correspondant,
dans lequel l'emplacement fixe est le même indice de symbole de DM-RS absolu qu'utilisé pour des symboles de DM-RS de liaison descendante ; et
un moyen de transmission (410) du DM-RS pendant le symbole déterminé du créneau.

7. Appareil selon la revendication 6, dans lequel le moyen de détermination du premier symbole de la partie de liaison montante du créneau détermine le premier symbole comme adjacent à un dernier symbole dans une partie de liaison descendante du créneau ou comme adjacent à un dernier symbole dans une période de garde suivant la partie de liaison descendante du créneau.

8. Appareil selon la revendication 6, comprenant en outre :
un moyen de détermination d'un symbole subséquent du créneau pour une transmission du DM-RS au niveau d'une partie à fréquence différente que celle utilisée pour une transmission du DM-RS pendant le symbole déterminé du créneau, dans lequel le moyen de détermination du symbole subséquent du créneau détermine un autre premier symbole d'une autre partie de liaison montante du créneau correspondant à la partie à fréquence différente ; et
un moyen de transmission du DM-RS pendant le symbole subséquent du créneau.

9. Appareil selon la revendication 6, comprenant en outre un moyen de réception, à partir d'une station de base, d'une indication d'un indice de l'emplacement de symbole fixe.

10. Appareil selon la revendication 6, comprenant en outre :
un moyen de détermination, sur la base de la détermination du fait que la valeur de retard configurée indique une transmission des communications dans le créneau subséquent, d'un symbole subséquent du créneau à titre d'autre indice de symbole fixe du créneau pour une transmission du DM-RS ; et
un moyen de transmission du DM-RS pendant le symbole subséquent du créneau.

11. Procédé de configuration d'une transmission d'un signal de référence de démodulation, DM-RS, dans des communications sans fil, réalisé par une station de base et comprenant :
une indication (502), à un équipement d'utilisateur, UE, (115), d'une valeur de retard configurée à titre de retard d'un certain nombre de créneaux entre une réception d'un octroi de ressources correspondant et une transmission de communications de liaison montante sur des ressources indiquées par l'octroi de ressources correspondant ;
une indication (504), à l'UE (115), d'une indication d'un indice de symbole fixe pour une transmission du DM-RS, dans lequel l'emplacement fixe est le même indice de symbole de DM-RS absolu qu'utilisé pour des symboles de DM-RS de liaison descendante ; et
une réception (506) au moins du DM-RS à partir de l'UE (115), dans lequel :
le DM-RS est reçu dans un symbole (710) d'un créneau correspondant à l'indice de symbole fixe lorsque la valeur de retard configurée indique une transmission des communications dans un créneau subséquent à une réception de l'octroi de ressources correspondant ; et
le DM-RS est reçu dans un premier symbole (610 ; 612) d'une partie de liaison montante du créneau lorsque la valeur de retard configurée indique une transmission des communications dans le même créneau pendant lequel l'octroi de ressources correspondant est reçu.

12. Appareil pour une configuration d'une transmission d'un signal de référence de démodulation, DM-RS, dans des communications sans fil, comprenant :
un moyen (242) d'indication (502), à un équipement d'utilisateur, UE, d'une valeur de retard configurée à titre de retard d'un certain nombre de créneaux entre une réception d'un octroi de ressources correspondant et une transmission de communications de liaison montante sur des ressources indiquées par l'octroi de ressources correspondant ;
un moyen (244) d'indication (504), à l'UE, d'une indication d'un indice de symbole fixe pour une transmission du DMRS, dans lequel l'emplacement fixe est le même indice de symbole de DM-RS absolu qu'utilisé pour des symboles de DM-RS de liaison descendante ; et
un moyen (280) de réception (506) au moins du signal de référence à partir de l'UE, dans lequel le moyen de réception est configuré pour recevoir le DM-RS :
dans un symbole (710) d'un créneau correspondant à l'indice de symbole fixe lorsque la valeur de retard configurée indique une transmission des communications dans un créneau subséquent à une réception de l'octroi de ressources correspondant ; et
dans un premier symbole (610 ; 612) d'une partie de liaison montante du créneau lorsque la valeur de retard configurée indique une transmission des communications dans le même créneau pendant lequel l'octroi de ressources correspondant est reçu.

13. Support lisible par ordinateur, comprenant un code exécutable par processeur qui, lorsqu'exécuté par un ou plusieurs processeurs d'un appareil de communication sans fil, amène l'appareil de communication sans fil à réaliser le procédé selon l'une quelconque des revendications 1 à 5.

14. Support lisible par ordinateur, comprenant un code exécutable par processeur qui, lorsqu'exécuté par un ou plusieurs processeurs d'un appareil de communication sans fil, amène l'appareil de communication sans fil à réaliser le procédé selon la revendication 11.
